# EUROPÄISCHE PATENTSCHRIFT

(11) **EP 3 848 693 B1**
(45) Veröffentlichungstag und Bekanntmachung des Hinweises auf die Patenterteilung: **09.11.2022**
(21) Anmeldenummer: 21159660.6
(22) Anmeldetag: 18.08.2009
(51) Int. Cl.: G01N 1/06, G01N 1/28

(54) **MIKROTOM UND VERFAHREN ZUR EINHANDSTEUERUNG EINES MIKROTOMS**
MICROTOME AND METHOD OF ONE-HAND OPERATION OF A MICROTOME
MICROTOME ET PROCÉDÉ DE COMMANDE D'UN MICROTOME À UNE MAIN

(30) Priorität: 16.01.2009 DE 102009004850; 23.01.2009 DE 102009006006; 28.01.2009 DE 102009006386
(43) Veröffentlichungstag der Anmeldung: 14.07.2021
(62) Teilanmeldung aus: 09777944.1
(73) Patentinhaber: HLT Handel, Logistik und Technologie AG, 4500 Solothurn (CH)
(72) Erfinder: Diehm, Thomas, 69118 Heidelberg (DE); Hess, Christian, 4500 Solothurn (CH)
(74) Vertreter: Louis Pöhlau Lohrentz

(56) Entgegenhaltungen:
- EP-A2- 1 358 462
- WO-A2-00/54020
- DE-A1- 19 911 173
- DE-A1-102006 041 208
- US-A1- 2004 050 074

## Beschreibung

Die Erfindung betrifft ein Mikrotom nach den Merkmalen des Oberbegriffs des Anspruchs 1. Insbesondere ein Mikrotom mit einer Messerhalteeinrichtung für ein Schneidmesser und mit einer Objekthalteeinrichtung für ein dünn zu schneidendes Objekt, wobei die Objekthalteeinrichtung zur Durchführung einer Schneidbewegung eine erste Antriebseinrichtung und die Objekthalteeinrichtung bzw. die Messerhalteeinrichtung zur Durchführung einer Zustellbewegung eine zweite Antriebseinrichtung aufweist, umfassend ein mechanisches Handrad und/oder elektronisches Handrad, über das die erste Antriebseinrichtung manuell betätigbar ist, wobei der ersten und der zweiten Antriebseinrichtung eine Steuerungselektronik und eine Bedieneinrichtung für die erste und die zweite Antriebseinrichtung zugeordnet ist.

Mikrotome sind in verschiedenen Ausführungsformen bekannt. Bspw. wird auf die Mikrotom-Modelle HM350S und HM355S der Firma Microm, Walldorf, das Mikrotom-Modell "Finesse ME" der Firma Thermo Shandon Runcorn, GB, oder auf das Rotationsmikrotom RM2255 sowie das Scheibenmikrotom DSC1 der Firma Leica, Nussloch, hingewiesen, wie es in der DE 199 11 163 C1 offenbart ist. Ein Mikrotom der eingangs genannten Art, das einen verbesserten Bedienkomfort aufweist, ist aus der EP 1 358462 B1 bekannt. Bei diesem bekannten Mikrotom weist die Bedieneinrichtung ein erstes Bedienelement und ein davon räumlich getrenntes, d.h. beabstandetes zweites Bedienelement auf. Das erste Bedienelement ist der ersten Antriebseinrichtung und das zweite Bedienelement ist der zweiten Antriebseinrichtung zugeordnet. Das erste Bedienelement weist zwei Steuerungsmodi, nämlich einen Drehmodus und einen Drückmodus, auf. Im Drehmodus wird durch Drehen des ersten Bedienelementes eine Schneidbewegung der Objekthalteeinrichtung gesteuert. Im Drückmodus des ersten Bedienelementes wird eine permanente Schneidbewegung mit konstanter Geschwindigkeit und Amplitude der Objekthalteeinrichtung, d.h. eine Dauerschneidfunktion, bewirkt. Im Drückmodus steuert das erste Bedienelement den Start und den Stopp der oszillierenden Schneidbewegung der Objekthalteeinrichtung und in seinem Drehmodus die Geschwindigkeit der linear oszillierenden Schneidbewegung. Bei diesem bekannten Mikrotom ist das zweite Bedienelement wie das erste Bedienelement in zwei Modi betätigbar, nämlich in einem Drehmodus zur Steuerung der Vorschubrichtung und/oder der Vorschubgeschwindigkeit der Objekthalteeinrichtung bzw. der Messerhalteeinrichtung, und in einem Druckmodus zur Steuerung der schrittweisen Vorschubbewegung der Objekthalteeinrichtung oder der Messerhalteeinrichtung.

Dieses bekannte Mikrotom weist also ein erstes und ein davon räumlich getrenntes zweites Bedienelement auf, welche die Bedieneinrichtung für die erste und die zweite Antriebseinrichtung bilden. Die beiden Bedienelemente erfordern entweder eine gleichzeitig zweihändige Bedienung oder aufeinander folgend die Bedienung mit einer Hand: Der Bedienkomfort ist im Vergleich zu anderen bekannten Mikrotomen, die eine Vielzahl Bedienelemente aufweisen, zwar bereits verbessert, er lässt jedoch noch Wünsche offen. Weitere Mikrotome sind in WO 00/54020 A2, DE 199 11 173 A1, DE 10 2006 041208 A1 und US 2004/050074 A1 offenbart.

In Kenntnis dieser Gegebenheiten liegt der Erfindung die Aufgabe zugrunde, ein Mikrotom der eingangs genannten Art zu schaffen, das einen optimalen Komfort in Bedienung und Ergonometrie aufweist, sowie ein ergonomisches Verfahren zur Steuerung eines entsprechenden Mikrotoms zu schaffen. Diese Aufgabe wird erfindungsgemäß durch ein Mikrotom mit den Merkmalen des Anspruches 1 beziehungsweise ein Verfahren mit den Merkmalen des Anspruchs 15 gelöst.

Erfindungsgemäß ist ein Mikrotom mit einer Messerhalteeinrichtung für ein Schneidmesser und mit einer Objekthalteeinrichtung für ein dünn zu schneidendes Objekt vorgesehen, wobei die Objekthalteeinrichtung zur Durchführung einer Schneidbewegung eine erste Antriebseinrichtung und die Objekthalteeinrichtung bzw. die Messerhalteeinrichtung zur Durchführung einer Zustellbewegung eine zweite Antriebseinrichtung aufweist, umfassend ein mechanisches Handrad und/oder elektronisches Handrad über das die erste Antriebseinrichtung manuell betätigbar ist, wobei der ersten und der zweiten Antriebseinrichtung eine Steuerungselektronik und eine Bedieneinrichtung für die erste und die zweite Antriebseinrichtung zugeordnet ist. Wesentlich dabei ist, dass die der Steuerungselektronik für die erste und die zweite Antriebseinrichtung zugeordnete Bedieneinrichtung ein Bedienelement aufweist, das als ein Universal-Regelknopf, oder als ein Universal-Bedienelement, in einem Schiebe/Kipp- und Dreh-Modus betätigbar ist, oder in einem Dreh- und Drück-Modus betätigbar ist, oder in einem Schiebe/Kipp- und Drück-Modus betätigbar ist, oder in einem Schiebe/Kipp-, Dreh und Drück-Modus betätigbar ist, um sowohl die vertikale Schneidebewegung als auch die horizontale Zustellbewegung der Objekthalteeinrichtung zu steuern.

Weiter ist erfindungsgemäß ein Verfahren zur Einhandsteuerung eines Mikrotoms vorgesehen, umfassend eine Messerhalteeinrichtung für ein Schneidmesser und mit einer Objekthalteeinrichtung für ein dünn zu schneidendes Objekt, wobei die Objekthalteeinrichtung zur Durchführung einer Schneidbewegung eine erste Antriebseinrichtung und die Objekthalteeinrichtung bzw. die Messerhalteeinrichtung zur Durchführung einer Zustellbewegung eine zweite Antriebseinrichtung aufweist, umfassend ein mechanisches Handrad und/oder elektronisches Handrad über das die erste Antriebseinrichtung manuell betätigbar ist, wobei der ersten und der zweiten Antriebseinrichtung eine Steuerungselektronik und eine Bedieneinrichtung für die erste und die zweite Antriebseinrichtung zugeordnet ist. Wesentlich dabei ist, dass die der Steuerungselektronik für die erste und zweite Antriebseinrichtung zugeordnete Bedieneinrichtung ein Bedienelement aufweist, das als ein Universal-Regelknopf, oder als ein Universal-Bedienelement, einhand betätigt wird, derart, dass eine Einhand-Bedienung über den Universal-Regelknopf, oder das Universal-Bedienelement, in einem in einem Schiebe/Kipp- und Dreh-Modus, oder in einem Dreh- und Drück-Modus, oder in einem Schiebe/Kipp- und Drück-Modus, oder in einem Schiebe/ Kipp-, Dreh und Drück-Modus vorgenommen wird, um sowohl die vertikale Schneidebewegung als auch die horizontale Zustellbewegung der Objekthalteeinrichtung zu steuern.

In einer vorzugsweisen Ausgestaltung kann das Mikrotom nur ein die Bedieneinrichtung bildendes Bedienelement aufweisen, das in unterschiedlichen Modi, wie einem Schiebe/ Kipp- und Drehmodus, oder in einem Schiebe/ Kipp-, Dreh- und Drückmodus betätigbar ist, wodurch eine Einhandbedienung möglich ist, woraus ein bisher nicht realisierbarer Bedienkomfort resultiert, der mit einem ergonomischen Design einhergehen kann.

Vorzugsweise kann das Bedienelement im Schiebe/ Kippmodus bspw. von einer Ruheposition ausgehend in sich kreuzenden Richtungen jeweils bis zu einer Endposition hin und her verstellbar sein. Zweckmäßig kann es hierbei sein, wenn das Bedienelement im Schiebe/ Kippmodus von der Ruheposition z.B. in einer Nord-Süd-Richtung und in einer Ost-West-Richtung bis zur jeweiligen Endposition hin und her verstellbar ist. Dabei kann es bevorzugt sein, wenn das Bedienelement in der Ruheposition und/oder zumindest in einer Endposition im Drück- und Drehmodus betätigbar ist. Bei einer Ausbildung der zuletzt genannten Art kann das Bedienelement bspw. zumindest in zwei Endpositionen im Drück- und Drehmodus betätigbar sein. Desgleichen kann es vorteilhaft sein, wenn das Bedienelement in allen Schiebe /Kipp-Endpositionen im Drück- und Drehmodus betätigbar ist, weil dann bei dem erfindungsgemäßen Mikrotom eine entsprechende Vielzahl unterschiedlicher Funktionen mittels des Bedienelementes aktivierbar ist.

Vorteilhaft kann es sein, wenn die Steuerungselektronik für die erste und die zweite Antriebseinrichtung frei programmierbar ist, um jede von dem jeweiligen Bediener bzw. Benutzer des Mikrotomes gewünschte Kombination der Funktionen des Mikrotoms wunschgemäß - je nach der bevorzugten Arbeitsweise des Benutzers - programmieren zu können. Dabei kann es vorteilhaft sein, wenn das Bedienelement selbst zur Programmierung der Steuerungselektronik geeignet ist, so dass eine Programmierung der verschiedenen Bedien-Funktionen bspw. über die Schaltfunktionen des Bedienelementes erfolgen kann. Desgleichen ist es möglich, dass die Programmierung der verschiedenen Bedien-Funktionen in bekannter Art und Weise über eine Menü-Taste oder eine Programm-Taste oder in Kombination mit dem Bedienelement erfolgt.

Die von der Steuerungselektronik geregelte erste Antriebseinrichtung kann einen DC-Motor oder einen Linearmotor aufweisen. Die zweite Antreibseinrichtung kann einen Schrittmotor aufweisen. Desgleichen ist es möglich, dass die zweite Antreibseinrichtung ein Piezo-Vorschubsystem aufweist.

Das erfindungsgemäße Mikrotom umfasst in einer vorteilhaften Ausgestaltung bspw. die folgenden Primär-Funktionen - ohne hierauf beschränkt zu sein:
Im Schiebe /Kippmodus bzw. im Drehmodus erfolgt bspw. eine Steuerung der ersten Antriebseinrichtung zur Durchführung einer Schneidebewegung der Objekthalteeinrichtung, wobei das Bedienelement in seiner Schiebe / Kippschaltfunktion, d.h. in seinem Schiebe /Kippmodus bspw. in Ost-West-Richtung, den Start/Stopp und in seiner Drehschaltfunktion, d.h. im Drehmodus, sowohl die Schneidegeschwindigkeit als auch die horizontale Vorschubgeschwindigkeit der Objekthalteeinrichtung steuert.

Im Schiebe/ Kippmodus bspw. in Nord-Süd-Richtung dient das Bedienelement zur Steuerung der zweiten Antriebseinrichtung zur Durchführung einer Vorschubbewegung und zur Festlegung der Vorschubrichtung zum schrittweisen und/oder kontinuierlichen Bewegen der Objekthalteeinrichtung oder der Messerhalteeinrichtung.

Im Schiebe/ Kippmodus sind bei dem erfindungsgemäßen Mikrotom bspw. folgende Funktionen ausführbar:
Das Bedienelement lässt sich aus seiner zentralen Ruheposition, d.h. aus der Mittellage, in Nord-Süd-Richtung und in Ost-West-Richtung hin und her verschieben. Wird das Bedienelement z.B. einmal kurz in Süd-Richtung, d.h. zum Bediener des Mikrotomes hin nach vorne bewegt, so erfolgt ein schrittweiser Vorschub der Objekthalteeinrichtung oder der Messerhalteeinrichtung mit einer vorgewählten Trimm- bzw. Feinschnittdicke. Wird das Bedienelement in dieser vorderen Endposition gehalten, so erfolgt bspw. eine kontinuierliche Vorschubbewegung mit einer vorgewählten Vorschubgeschwindigkeit. Wird das Bedienelement losgelassen, so bewegt es sich automatisch in die Mittellage, d.h. Ruheposition, zurück und die Vorschubbewegung wird gestoppt.

Die Wirkungsweise in der entgegengesetzten, d.h. in Nord-Richtung, ist bezüglich eines Rücklaufs der Objekthalteeinrichtung die gleiche.

Wird das Bedienelement bspw. länger als 1 sec in der Endposition der Nord-Richtung festgehalten, so kann z.B. als Zusatzfunktion eine vorprogrammierbare rückwärtige Position der Objekthalteeinrichtung automatisch angefahren werden.

Bezüglich der oben erwähnten Vorschubgeschwindigkeit sind verschiedene Möglichkeiten realisierbar, wie z.B.:
Die Vorschubgeschwindigkeit ist programmierbar, sie beträgt bspw. konstant 800 µm/sec oder jeden beliebigen anderen gewünschten Wert.

Mit dem Schiebe/ Kippmodus ist z.B. der Drehmodus kombinierbar. Wird das Bedienelement in Süd-Richtung nach vorne bewegt, in der vorderen Endposition festgehalten und anschließend in dieser Endposition nach rechts oder nach links gedreht, kann damit die Vorschubgeschwindigkeit der Objekthalteeinrichtung wunschgemäß geregelt werden. Bei einer solchen Ausbildung ist es jedoch vorteilhaft, den kontinuierlich erfolgenden Vorschub in der vorprogrammierten Vorschubgeschwindigkeit insofern zu ändern, als der Vorschub dann bspw. kontinuierlich schrittweise erfolgt, z. B. 3 Vorschubschritte/sec in der vorgewählten Trimmschnittdicke oder Feinschnittdicke. Aus dieser Standardfunktion heraus kann dann mittels der Drehschaltfunktion. d.h. mittels des Drehmodus, die Vorschubgeschwindigkeit wunschgemäß verändert, d.h. reduziert oder vergrößert werden.

Weitere Funktionen des erfindungsgemäßen Mikrotomes werden nachfolgend beispielhaft beschrieben:
Bei dem erfindungsgemäßen Mikrotom ermöglicht die Kombination von Schiebe/ Kipp-, Dreh- und Drückmodus in Verbindung mit einem sogenannten elektronischen Handrad in einem manuellen Standardmodus die gleichzeitige Steuerung der Schneidbewegung und der Vorschubbewegung mit einem Bedienelement, dessen Funktionsweise wie folgt sein kann:
Durch Verschieben des Bedienelementes bspw. in Süd-Richtung erfolgt - wie bereits ausgeführt worden ist - eine horizontale Vorschubbewegung der Objekthalteeinrichtung mit einer vorprogrammierten, konstanten Vorschubgeschwindigkeit. Durch einmaliges Verschieben des Bedienelementes bspw. in West-Richtung wird der manuelle Schneidemodus freigeschaltet und durch die Drehschaltfunktion des Bedienelementes wird die manuelle Schneidebewegung der Objekthalteeinrichtung bewirkt. Auf diese Weise lässt sich das dünn zu schneidende Objekt zielorientiert über seine gesamte Präparat-Fläche an die an der Messerhalteeinrichtung vorgesehene Messerschneide heranfahren und gegebenenfalls nachorientieren, ohne von einem zum anderen Bedienelement umgreifen oder gleichzeitig mit zwei Händen arbeiten zu müssen, um eine horizontale und vertikale Objektbewegung durchzuführen.

Bei dem erfindungsgemäßen Mikrotom kann das Bedienelement an einem Steuerungselement vorgesehen sein, das von einem Bedienpaneel gebildet ist. Das Bedienpaneel kann einen ersten und einen zweiten Bedienknopf, eine Anzahl Drucktasten und eine Anzahl Leuchtelemente, wie LEDs, aufweisen.

Der erste Bedienknopf verfügt z.B. über eine Drehfunktion zur Einstellung des schrittweisen oder kontinuierlichen Vorschubs der Objekthalteeinrichtung in µm-Werten und über eine Drückfunktion zum Umschalten von Trimmschnitt-Werten zu Feinschnitt-Werten, und umgekehrt. Der Wechsel erfolgt bspw. durch einmaliges Drücken, wobei die eingestellten Werte jederzeit auch während des Schneidvorgangs verändert werden können.

Der Vorschub der Objekthalteeinrichtung erfolgt z.B. mit Hilfe eines Schrittmotors.

Der zweite Bedienknopf bildet ein sogenanntes Universal-Bedienelement, d.h. einen Universal-Regelknopf, der nachfolgend als URK bezeichnet wird. Der URK ist bspw. in einem Schiebe/ Kipp-, Dreh- und Drückmodus betätigbar, um sowohl die vertikale Schneidebewegung als auch die horizontale Zustellbewegung der Objekthalteeinrichtung zu steuern.

Die Steuerungsfunktion des URK ist z.B. wie folgt: Bei der Inbetriebnahme des Mikrotomes ist die Bremse des Antriebsmotors für die Schneidbewegung generell aktiviert. Durch einmaliges Verschieben des URK z.B. in West-Richtung wird die Bremse gelöst. In diesem Betriebszustand befindet sich das Mikrotom in einem ersten Modus, d.h. in einem manuellen Standardmodus, in welchem durch eine Drehbewegung des URK über einen DC-Motor eine entsprechende Auf- und Abwärtsbewegung der Objekthalteeinrichtung durchgeführt wird. Die Drehgeschwindigkeit am URK bestimmt die Geschwindigkeit der Auf- und Abwärtsbewegung der Objekthalteeinrichtung. Bei nochmaligem Verschieben des URK in die gleiche Richtung wird die Bremse des Motors aktiviert, wodurch die Objekthalteeinrichtung in der jeweiligen Vertikal-Position arretiert wird. Durch zweimaliges Verschieben des URK wird ein zweiter Modus, d.h. eine Dauerschneidfunktion gestartet, wobei durch gezieltes Drehen des URK jede beliebige Geschwindigkeit bis bspw. maximal 450 mm/sec eingestellt werden kann. Durch nochmaliges Verschieben des URK in West-Richtung wird die kontinuierliche Schneidfunktion gestoppt und die Bremse des Motors aktiviert. Zu welchem Zeitpunkt und in welcher Hubposition gestoppt werden soll, kann über die vorgewählte Betriebsart, d.h. den vorgewählten Modus, bestimmt werden.

Die Steuerung des Schrittmotors für die horizontale Bewegung der Objekthalteeinrichtung erfolgt ebenfalls mittels des URK - und zwar bspw. wie folgt:
Die horizontale Bewegung kann jederzeit mit oder ohne aktivierte MotorBremse im Schiebemodus gestartet werden, indem der URK aus der Mittellage in Nord-Süd-Richtung verschoben wird. Wird der URK einmal kurz in Süd-Richtung, d.h. zum Bediener hin, nach vorne bewegt, so erfolgt ein einmalige Vorschubschritt der Objekthalteeinrichtung in der jeweils vorgewählten Trimm- oder Feinschnittdicke. Wird der URK in der vorderen Endposition gehalten, so erfolgt ein kontinuierlich, schrittweiser Vorschub von bspw. drei Vorschubschritten pro Sekunde in der vorgewählten Trimm- oder Feinschnittdicke. Aus dieser Position heraus kann dann über die Drehschaltfunktion, d.h. mit einer entsprechenden Drehbewegung des URK die Vorschubgeschwindigkeit verändert, d.h. reduziert oder vergrößert werden. Wird der URK losgelassen, bewegt er sich automatisch in die Mittellage, d.h. Ruheposition, zurück und die Vorschubbewegung wird gestoppt.

Die Wirkungsweise in der entgegengesetzten Richtung, d.h. in der Nord-Richtung, ist bezüglich einer Rücklaufbewegung der Objekthalteeinrichtung die gleiche.

Wird der URK bspw. länger als 1 sec in der Nord-Endposition festgehalten, so kann z.B. als Zusatzfunktion eine vorprogrammierbare, rückwärtige Position der Objekthalteeinrichtung automatisch angefahren werden, woraus eine sogenannte "Memotasten-Funktion" resultiert.

Eine vom jeweiligen Mikrotom-Benutzer gewünschte Belegung von Ost-West-Funktionen des URK ist möglich.

Das die Bedienknöpfe aufweisende Paneel kann links oder rechts am Gehäuse des Mikrotomes angebracht oder horizontal neben dem Mikrotom platziert sein. Unter ergonomischen Gesichtspunkten kann die vertikale Positionierung am Mikrotom-Gehäuse bevorzugt sein. Die Bluetooth-Technik kann hierbei zur Anwendung gelangen.

Für alle Benutzer eines erfindungsgemäßen Mikrotomes wichtige Bedien- und Funktionsinformationen, wie bspw. Trimm- und Feinschnittdicke, Betriebsarten, Schneide- und Vorschubgeschwindigkeit, realisierte Schnittanzahl, Schnittdickensummierung, Restvorschubwerte, Run-, StoppBrems-Status, Schneidefenster, Programmier-Status, Service-Informationen o.dgl. können über ein Display am Mikrotom-Gehäuse visualisiert werden.

Das erfindungsgemäße Mikrotom kann auch in einer Hybrid-Variante ausgebildet sein. Hierbei handelt es sich um eine Gerätekombination eines klassischen Mikrotomes in Kombination mit einer elektronischen Steuerung.

Solche halbautomatischen Mikrotome mit einem Schrittmotor für die Zustellbewegung der Objekthalteeinrichtung weisen einen Drehknopf auf, um die Schnittdickenwerte einzustellen. Mit dem Drehknopf kann über eine Drückfunktion von der Einstellung der Trimmschnittdicke auf die Feinschnittdicken-Einstellung, oder umgekehrt, umgeschaltet werden. Diese seit Jahren bekannte Dreh-Drück-Funktion wird erfindungsgemäß mit der Schiebe/ Kipp-Funktion z.B. in Nord-Süd-Richtung kombiniert, so dass mit einem Bedienelement in der Ruhe- bzw. Null-Position, d.h. in der Mittellage - wie bekannt - bspw. die Schnittdickenwerte eingestellt werden und die Umschaltung getätigt werden kann. Bei Loslassen des Bedienelementes wird der Vorschub unterbrochen, das Bedienelement geht in die Mittellage zurück und befindet sich wieder in der Einstellposition für den jeweils gewünschten Schnittdickenwert. Diese neuartige Bedienbarkeit des erfindungsgemäßen Mikrotomes basiert auf einer Drei-Modi-Funktion des Bedienelementes mit seinen Schiebe/ Kipp-, Dreh- und Drück-Schaltfunktionen, die sich jedoch auf die zweite Antriebseinrichtung beziehen. Der einzigartige Vorteil ist, dass damit bei dem erfindungsgemäßen Mikrotom der erste, dem Stand der Technik entsprechende Bedienknopf mit seinem Dreh/ Drückmodus entfallen kann und damit gleichzeitig der Bedienkomfort erheblich verbessert wird. Dies gilt auch für Standardmikrotome ohne motorischen Schneideantrieb aber mit Schrittmotor-Technologie und erfindungsgemäßer Steuerungselektronik für die zweite Antriebseinrichtung mit einem Bedienelement, das im Schiebe/ Kipp-, Dreh- und Drückmodus betätigbar ist.

Das erfindungsgemäße Mikrotom ermöglicht also eine einzigartige intuitive, quasi blinde Einhandbedienung mit erheblichen Vorteilen bezüglich Ergonomie, Bedienungskomfort sowie Sicherheit und einer daraus resultierenden erhöhten Produktivität im Vergleich mit allen zur Zeit auf dem Markt befindlichen Mikrotomen und in ganz besonderem Maße im Vergleich mit bekannten Kryostat-Mikrotomen, bei welchen die Bedienelemente bislang voneinander räumlich getrennt, an der rechten und an der linken Seite des Kryostat-Gehäuses vorgesehen sind.

Bei dem erfindungsgemäßen Mikrotom können mit den Schiebe/ Kipp-, Dreh-und Drück-Schaltfunktionen nicht nur die oben beschriebenen Funktionen, sondern eine Vielzahl weiterer programmierbarer Bedienfunktionen wie Einzelhub, Dauerhub, Tasthub, automatische Trimmschneidezyklen und Feinschneidezyklen, Schneidgeschwindigkeit und Vorschubgeschwindigkeit, Trimmschneidedicken und Feinschneidedicken usw. in einfacher Weise erfasst, kombiniert und wunschgemäß abgerufen werden.

Die nachfolgenden Anwendungsbeispiele verdeutlichen diverse Bedienfunktionen des erfindungsgemäßen Mikrotomes - ohne hierauf beschränkt zu sein:
Anwendungsbeispiel 1:
   Dauerhub als Standardmodus. Dabei kann die Startfunktion bspw. durch zweimaliges Verschieben und die Stoppfunktion durch einmaliges Verschieben des Bedienelementes bspw. in die West-Richtung bewirkt werden. Die Geschwindigkeitsregelung erfolgt über die bekannte Drehschaltfunktion des Bedienelementes. Ein Einzelhub als Zusatzfunktion kann bspw. durch ein kurzes Verschieben des Bedienelementes in die Ost-Richtung erfolgen, um einen einmaligen Schneidehub zu bewirken. Dies kann beliebig wiederholt werden.
Anwendungsbeispiel 2:
   Dauerhub als Standardmodus plus Zusatzfunktionen wie automatischer Trimmzyklus und automatischer Feinschneidezyklus.

Automatischer Trimmzyklus: Ein Verschieben des Bedienelementes in die Ost-Endposition und ein anschließendes Drehen des Bedienelementes z.B. nach links, bewirkt z.B. 20 Schneidhübe mit einer Schnittdicke von bspw. jeweils 30 µm bei einer Schneidgeschwindigkeit von 400 mm/sec und einen automatischen Stopp nach Ablauf des Schneidzyklus. Ein sofortiger Stopp ist jederzeit durch einmaliges Verschieben des Bedienelementes in West-Richtung möglich.

Automatischer Feinschneidezyklus: Ein nochmaliges Verschieben des Bedienelementes in Ost-Richtung bis in die dortige Endposition und ein anschließendes Drehen des Bedienelementes nach rechts bedingt z.B. 10 Hübe der Objekthalteeinrichtung mit einer Schnittdicke von jeweils 5 µm mit einer Schneidgeschwindigkeit von 200 mm/sec, gefolgt von z.B. 5 Schneidhüben mit einer Schnittdicke von 2 µm mit einer Geschwindigkeit von 50 mm/sec, wonach automatisch ein Stopp erfolgt.

Anwendungsbeispiel 3:
Schiebe/ Kipp-, Dreh- und Drück-Konfiguration mit Zusatzfunktion Schnittdickeneinstellung und Wechsel Trimm/ Feinschneiden.

Die Steuerung der ersten und zweiten Antreibseinrichtung erfolgt primär in den detailliert beschriebenen Funktionen im Schieb/ Kipp- und Drehmodus. Der Wechsel vom Trimm- auf den Feinschneidemodus wird mittels einer Druckschaltfunktion durch zweimaliges Drücken des URK in seiner Mittelposition bewirkt. Die Schnittdickeneinstellung erfolgt durch eine Drück/ Drehschaltfunktion, d.h. im gedrückten Zustand werden über eine Drehbewegung des URK nach links oder rechts die Schnittdickenwerte verkleinert oder vergrößert. Die vorgewählte Schnittdicke des aktuellen Trimm- oder Feinschneidemodus wird über ein Display angezeigt und kann durch einmaliges Drücken und Drehen des URK jederzeit verändert werden.

Bei einem Standardmikrotom ohne motorischen Schneideantrieb - wie es oben erwähnt worden ist -, aber mit dem erfindungsgemäßen Schiebe/ Kipp, Dreh-und Drückmodus erfolgt der Wechsel Trimm/ Feinschneiden, und umgekehrt, durch eine einmalige Drückschaltfunktion und die Veränderung der Schnittdickenwerte im jeweiligen Modus durch eine einfache Drehbewegung. Das stellt eine erhebliche Vereinfachung der Gerätebedienung und eine erhebliche Kostenreduktion dar.

Vorteilhaft könnte auch sein, das erfindungsgemäße Mikrotom durch eine Schiebe-/ Kipp- und Druckschaltfunktion zu steuern, indem die horizontale Objektbewegung über den Schiebemodus in der Nord-Süd-Richtung und die vertikale Objektschneidebewegung ebenfalls über den Schiebemodus in der Ost-West-Richtung gesteuert wird, wobei die jeweilige Geschwindigkeit über eine entsprechende Verschiebeweglänge in der jeweiligen Richtung bestimmt wird. Die Start/ Stopp- und Bremsfunktion erfolgt über einen Drückmodus. Eine derartige Konfiguration ist insbesondere dann sinnvoll, wenn das Mikrotom noch über ein manuell zu betätigendes, mechanisches Handrad verfügt.

Natürlich kann ein herkömmliches Mikrotom mit einem Schrittmotor und einem DC-Motor für den motorisierten Schneideablauf, basierend auf dem heutigen Stand der Technik mit einem mechanischen Handrad, mit der erfindungsgemäßen neuen Steuerungs- und Regelungstechnik im Dreh-/ Drückmodus oder im Schiebe-/ Kipp-, Dreh-, Drückmodus betrieben werden.

Oben wurden beispielhaft einige Anwendungsbeispiele und Konfigurationen beschrieben, die mit dem erfindungsgemäßen Mikrotom realisierbar sind. Es versteht sich jedoch, dass jede beliebige Einzelfunktion oder Kombination von Funktionen des erfindungsgemäßen Mikrotomes - je nach der bevorzugten Arbeitsweise des Benutzers des Mikrotomes - programmierbar ist und über die Dreh-, Drück- und Schiebe-Schaltfunktion des Bedienelementes individuell in der jeweils gewünschten Zuordnung belegt
und abgerufen werden kann.

Für einen Benutzer wichtige Bedien- und Funktionsinformationen, wie bspw. Trimm- und Feinschnittdicke, Betriebsarten, Schneide- und Vorschubgeschwindigkeit, realisierte Schnittanzahl, eingestellte Schneidehublänge, vertikale und horizontale Objektwechselpositionen, Restvorschubwerte, Schnittdickensummierung, Run-/ Stopp-/ Brems-Status, Schneidefenster u.a., können über ein Display an einem Bedienpult und/oder am Mikrotomgehäuse visualisiert werden.

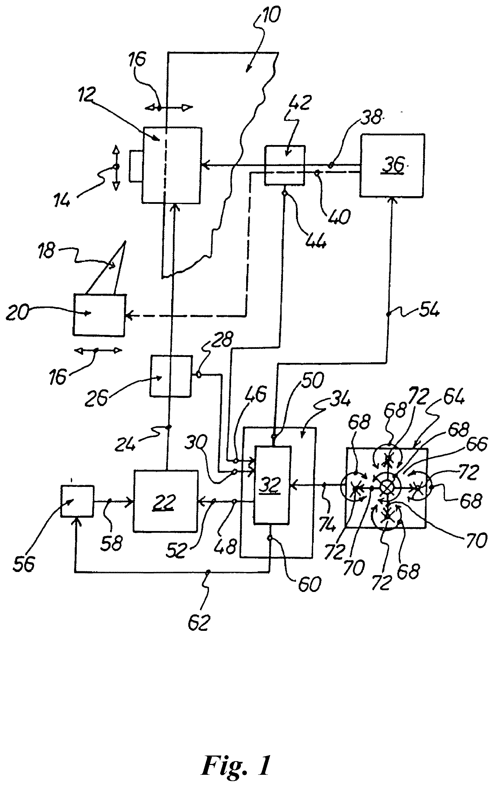

Weitere Einzelheiten, Merkmale und Vorteile ergeben sich aus der nachfolgenden Beschreibung eines in der Zeichnung schematisch, stark abstrahiert angedeuteten Ausführungsbeispieles des erfindungsgemäßen Mikrotomes - nach Art eines Rotationsmikrotomes -, wobei es sich versteht, dass erfindungsgemäß die Objekthalteeinrichtung oder die Messerhalteeinrichtung die Zustellbewegung zum Grobschneiden, zum Trimmen und zum Feinschneiden durchführen kann, d.h. die Erfindung ist nicht auf Rotations- oder Kryostatmikrotome beschränkt.

Die Figur zeigt abgeschnitten schematisch ein Grundgestell 10 eines Mikrotomes. Am Grundgestell 10 ist eine Objekthalteeinrichtung 12 vertikal oszillierend, d.h. auf und ab und horizontal hin- und hergehend beweglich vorgesehen. Bei dem Mikrotom handelt es sich um ein Rotationsmikrotom; die Objekthalteeinrichtung 12 ist zur Durchführung der vertikalen, oszillierenden Bewegung geeignet. Diese Bewegung ist durch den Doppelpfeil14 angedeutet. Die hin- und hergehende Bewegung der Objekthalteeinrichtung 12 ist durch den Doppelpfeil 16 verdeutlicht.

Mit der Bezugsziffer 18 ist ein Schneidelement bezeichnet, das an einer Messerhalteeinrichtung 20 des Mikrotomes vorgesehen ist. Bei dem Schneidelement 18 handelt es sich bspw. um ein Schneidmesser oder um eine Schneidklinge.

Die Objekthalteeinrichtung 12 ist zur Durchführung der vertikal oszillierenden Bewegung 14 mit einer ersten Antriebseinrichtung 22 wirkverbunden. Diese Wirkverbindung ist durch den Pfeil 24 angedeutet.

Bei der ersten Antriebseinrichtung 22 handelt es sich bspw. um einen DC-Motor oder um einen Linearmotor.

Die Bewegung der ersten Antriebseinrichtung 22 wird von einem Geber 26 erfasst. Der Geber 26 weist einen Signalausgang 28 auf. Mit Hilfe des Gebers 26 werden am Signalausgang 28 bei der Bewegung der ersten Antriebseinrichtung 22 Signale erzeugt. Der Signalausgang 28 ist mit einem Eingang 30 einer CPU 32 einer Steuerungselektronik 34 zusammengeschaltet. Die CPU 32 dient zur Auswertung der vom Geber 26 generierten Signale, um bspw. die Drehrichtung und die Drehgeschwindigkeit des DC-Motors oder des Linearmotors der ersten Antriebseinrichtung 22 zu bestimmen.

Die Objekthalteeinrichtung 12 ist außerdem zur Durchführung der hin- und hergehenden Bewegung 16 mit einer zweiten Antriebseinrichtung 36 verbunden. Diese Verbindung ist durch den Pfeil 38 verdeutlicht. Diese Zustellbewegung kann jedoch auch durch eine Wirkverbindung der zweiten Antriebseinrichtung 36 mit der Messerhalteeinrichtung 20 realisiert sein. Diese Wirkverbindung ist durch den strichlierten Pfeil 40 angedeutet.

Die zweite Antriebseinrichtung 36 kann einen Schrittmotor oder ein Piezo-Antriebssystem aufweisen.

Ähnlich wie in der durch den Pfeil 24 angedeuteten Wirkverbindung der ersten Antriebseinrichtung 22 mit der Objekthalteeinrichtung 12 ist in der durch den Pfeil 38 bzw. durch den strichlierten Pfeil 40 angedeuteten Wirkverbindung ein Geber 42 vorgesehen, der einen Ausgang 44 aufweist. Der Ausgang 44 ist mit einem Eingang 46 der CPU 32 zusammengeschaltet.

Die CPU 32 weist einen Ausgang 48 und einen Ausgang 50 auf. Der Ausgang 48 ist mit der ersten Antriebseinrichtung 22 zusammengeschaltet. Das ist durch den Pfeil 52 angedeutet. Der Ausgang 50 ist mit der zweiten Antriebseinrichtung 36 zusammengeschaltet, was durch den Pfeil 54 angedeutet ist.

Die erste Antriebseinrichtung 22 ist mit einer Motorbremse 56 verbunden. Diese Verbindung ist durch den Pfeil 58 verdeutlicht.

Die CPU 32 weist einen dritten Ausgang 60 auf, der mit der Motorbremse 56 zusammengeschaltet ist. Das ist durch den Pfeil 62 angedeutet.

Bei dem erfindungsgemäßen Mikrotom ist der ersten und der zweiten Antriebseinrichtung 22 und 36 über die CPU 32 der Steuerungselektronik 34 eine Bedieneinrichtung 64 zugeordnet, die ein Bedienelement 66 aufweist, das in einem durch bogenförmige Doppelpfeile 68 angedeuteten Drehmodus, einem durch "x" angedeuteten Drückmodus und in einem durch sich kreuzende Pfeile 70 angedeuteten Schiebemodus in Nord-Süd-Richtung und in Ost-West-Richtung jeweils bis zu einer Endposition 72 verstellbar, d.h. betätigbar ist.

Die Funktionswirkungen der einzelnen Modi wurden weiter oben beispielhaft erläutert, so dass zur Vermeidung von Wiederholungen auf diese Ausführungsbeispiele verwiesen wird.

Die Zuordnung, d.h. Wirkverbindung des Bedienelementes 66 der Bedieneinrichtung 64 zur Steuerungselektronik 34 bzw. zur CPU 32 der Steuerungselektronik 34 ist durch den Pfeil 74 verdeutlicht.

### Referenzzeichen:

- 10: Grundgestell
- 12: Objekthalteeinrichtung (an 10)
- 14: Doppelpfeil/Auf- und Abwärtsbewegung (von 12)
- 16: Doppelpfeil/hin- und hergehende Bewegung (von 12)
- 18: Schneidelement (an 20)
- 20: Messerhalteeinrichtung
- 22: erste Antriebseinrichtung (für 12)
- 24: Pfeil/Wirkverbindung (zwischen 22 und 12)
- 26: Geber (in 24 für 32)
- 28: Signalausgang (von 26)
- 30: Eingang (von 32 für 28)
- 32: CPU (von 34)
- 34: Steuerungselektronik (für 22, 36)
- 36: zweite Antriebseinrichtung (für 12 bzw. 20)
- 38: Pfeil/Wirkverbindung (zwischen 36 und 12)
- 40: Pfeil/Wirkverbindung (zwischen 36 und 20)
- 42: Geber (in 38 bzw. 40)
- 44: Ausgang (von 42)
- 46: Eingang (von 32 für 44)
- 48: Ausgang (von 32 für 22)
- 50: Ausgang (von 32 für 36)
- 52: Pfeil/Wirkverbindung (zwischen 32 und 22)
- 54: Pfeil/Wirkverbindung (zwischen 32 und 36)
- 56: Motorbremse (für 22)
- 58: Pfeil/Wirkverbindung (zwischen 56 und 22)
- 60: Ausgang (von 32 für 56)
- 62: Pfeil/Wirkverbindung (zwischen 60 und 56)
- 64: Bedieneinrichtung (für 22 und 36)
- 66: Bedienelement (von 64)
- 68: Doppelpfeil/Drehmodus (von 66)
- 70: Pfeile/Schiebemodus (von 66)
- 72: Endpositionen (von 70)
- 74: Pfeil/Wirkverbindung (zwischen 66 und 32)

## Patentansprüche

1. Mikrotom mit einer Messerhalteeinrichtung (20) für ein Schneidmesser (18) und mit einer Objekthalteeinrichtung (12) für ein dünn zu schneidendes Objekt, wobei die Objekthalteeinrichtung (12) zur Durchführung einer Schneidbewegung (14) eine erste Antriebseinrichtung (22) und die Objekthalteeinrichtung (12) bzw. die Messerhalteeinrichtung (20) zur Durchführung einer Zustellbewegung (16) eine zweite Antriebseinrichtung (36) aufweist, umfassend ein mechanisches Handrad und/oder elektronisches Handrad, über das die erste Antriebseinrichtung (22) manuell betätigbar ist, wobei der ersten und der zweiten Antriebseinrichtung (22, 36) eine Steuerungselektronik (34) und eine Bedieneinrichtung (64) für die erste und die zweite Antriebseinrichtung (22, 36) zugeordnet ist,
**dadurch gekennzeichnet,**
**dass** die der Steuerungselektronik (34) für die erste und die zweite Antriebseinrichtung (22, 36) zugeordnete Bedieneinrichtung (64) ein Bedienelement (66) aufweist, das als ein Universal-Regelknopf (66), oder als ein Universal-Bedienelement (66), in einem Schiebe/ Kipp- und Dreh-Modus betätigbar ist, oder in einem Dreh- und Drück-Modus betätigbar ist, oder in einem Schiebe/ Kipp-, und Drück-Modus betätigbar ist, oder in einem Schiebe/ Kipp-, Dreh- und Drück-Modus betätigbar ist, um sowohl die vertikale Schneidebewegung als auch die horizontale Zustellbewegung der Objekthalteeinrichtung zu steuern.

2. Mikrotom nach Anspruch 1,
**dadurch gekennzeichnet,**
**dass** das Bedienelement (66) als ein Einhand-Bedienelement (66) für beide Antriebseinrichtungen (22, 36) ausgebildet ist

3. Mikrotom nach Anspruch 1 oder 2,
**dadurch gekennzeichnet,**
**dass** das Mikrotom ein Gehäuse aufweist an dem ein Display zur Anzeige von Funktionsinformationen aufweist, vorzugsweise von Trimm- und Feinschnittdicke und/oder Betriebsarten und/oder Schneide- und Vorschubgeschwindigkeit und/oder realisierte Schnittanzahl und/oder Schnittdickensummierung und/oder Restvorschubwerte und/oder Run-, StoppBrems-Status und/oder Schneidefenster und/oder Programmier-Status und/oder Service-Informationen.

4. Mikrotom nach einem der Ansprüche 1 bis 3,
**dadurch gekennzeichnet,**
**dass** das Universal-Bedienelement (66), oder der Universal-Regelknopf (66), an einem Steuerungselement vorgesehen ist, das von einem Bedienpaneel gebildet ist.

5. Mikrotom nach Anspruch 4,
**dadurch gekennzeichnet,**
**dass** das Bedienpaneel links oder rechts an einem Gehäuse des Mikrotoms angebracht ist, vorzugsweise vertikal am Mikrotom-Gehäuse positioniert ist, oder horizontal neben dem Mikrotom platziert ist.

6. Mikrotom nach einem der vorhergehenden Ansprüche,
**dadurch gekennzeichnet,**
**dass** das Universal-Bedienelement (66), oder der Universal-Regelknopf (66) als elektronisches Universal-Bedienelement (66), oder als elektronischer Universal-Regelknopf (66) ausgebildet ist, vorzugsweise dass das Universal-Bedienelement (66), oder der Universal-Regelknopf (66) als elektronisches Handrad ausgebildet ist.

7. Mikrotom nach einem der vorhergehenden Ansprüche,
**dadurch gekennzeichnet,**
**dass** die erste Antriebseinrichtung (22) einen Linearmotor, oder einen DC-Motor, aufweist, und/oder dass die zweite Antriebseinrichtung (36) einen Schrittmotor aufweist.

8. Mikrotom nach einem der vorhergehenden Ansprüche,
**dadurch gekennzeichnet,**
**dass** der Universal-Regelknopf (66) im Schiebe/ Kipp-Modus von einer Ruheposition ausgehend in sich kreuzenden Richtungen jeweils bis zu einer Endposition hin und her verstellbar ist, und/oder. dass der Universal-Regelknopf (66) im Schiebe/ Kipp-Modus von der Ruheposition in Nord-Süd-Richtung und in Ost-West-Richtung bis zur jeweiligen Endposition hin und her verstellbar ist.

9. Mikrotom nach Anspruch 8,
**dadurch gekennzeichnet,**
**dass** der Universal-Regelknopf (66) in der Ruheposition im Dreh- und Drück-Modus betätigbar ist.

10. Mikrotom nach Anspruch 8 oder 9,
**dadurch gekennzeichnet,**
**dass** der Universal-Regelknopf (66) zumindest in einer Endposition im Dreh-und Drück-Modus betätigbar ist, vorzugsweise dass der Universal-Regelknopf (66) in allen Endpositionen im Dreh- und Drück-Modus betätigbar ist.

11. Mikrotom nach Anspruch 10,
**dadurch gekennzeichnet,**
**dass** der Universal-Regelknopf (66) zumindest in zwei Endpositionen im Dreh- und Drück-Modus betätigbar ist.

12. Mikrotom nach einem der Ansprüche 1 bis 11,
**dadurch gekennzeichnet,**
**dass** die zweite Antriebseinrichtung (36) ein Piezo-Vorschubsystem aufweist.

13. Mikrotom nach einem der Ansprüche 1 bis 12,
**dadurch gekennzeichnet,**
**dass** der Universal-Regelknopf (66) zur Programmierung der Steuerungselektronik (34) geeignet ist.

14. Mikrotom nach einem der vorhergehenden Ansprüche,
**dadurch gekennzeichnet,**
**dass** der Universal-Regelknopf (66) per Einhand bedient wird, um diesen in einem Schiebe/ Kipp- und Dreh-Modus zu betätigen, oder in einem Dreh- und Drück-Modus zu betätigen, oder in einem Schiebe/ Kipp-, und Drück-Modus zu betätigen, oder in einem Schiebe/ Kipp-, Dreh- und Drück-Modus zu betätigen.

15. Verfahren zur Einhandsteuerung eines Mikrotoms nach Anspruch 1, wobei das Universal-Bedienelement (66) einhand betätigt wird, derart, dass eine Einhand-Bedienung über den Universal-Regelknopf (66), oder das Universal-Bedienelement (66), in einem Schiebe/ Kipp- und Dreh-Modus, oder in einem Dreh- und Drück-Modus, oder in einem Schiebe/ Kipp-, und Drück-Modus, oder in einem Schiebe/ Kipp-, Dreh und Drück-Modus vorgenommen wird, um sowohl die vertikale Schneidebewegung als auch die horizontale Zustellbewegung der Objekthalteeinrichtung zu steuern.

## Claims

1. Microtome having a knife holding device (20) for a cutting blade (18) and having an object holding device (12) for an object to be cut thinly, wherein the object holding device (12) has a first drive device (22) for carrying out a cutting movement (14), and the object holding device (12) or the knife holding device (20) has a second drive device (36) for carrying out a feed movement (16), comprising a mechanical handwheel and/or electronic handwheel, via which the first drive device (22) is actuatable manually, wherein an electronic control system (34) and an operating device (64) for the first and the second drive device (22, 36) is allocated to the first and the second drive device (22, 36),
**characterised in that**
the operating device (64) allocated to the electronic control system (34) for the first and the second drive device (22, 36) has an operating element (66), which, as a universal regulating button (66) or as a universal operating element (66), is actuatable in a shifting/tilting and rotating mode or is actuatable in a rotating and pushing mode or is actuatable in a shifting/tilting and pushing mode or is actuatable in a shifting/tilting, rotating and pushing mode, in order to control both the vertical cutting movement and the horizontal feed movement of the object holding device.

2. Microtome according to claim 1,
**characterised in that**
the operating element (66) is formed as a single-hand operating element (66) for both drive devices (22, 36).

3. Microtome according to claim 1 or 2,
**characterised in that**
the microtome has a housing on which a display for displaying function information, preferably trimming or finely cutting thickness and/or operating types and/or cutting and feed speed and/or implemented cutting number and/or cutting thickness summation and/or remaining feed values and/or running, stopping brake status and/or cutting window and/or programming status and/or service information.

4. Microtome according to one of claims 1 to 3,
**characterised in that**
the universal operating element (66), or the universal regulating button (66), is provided on a control element, which is formed by an operating panel.

5. Microtome according to claim 4,
**characterised in that**
the operating panel is attached to the left or to the right on a housing of the microtome, preferably is positioned vertically on the microtome housing, or is placed horizontally next to the microtome.

6. Microtome according to one of the preceding claims,
**characterised in that**
the universal operating element (66), or the universal regulating button (66), is formed as an electronic universal operating element (66), or as an electronic universal regulating button (66), preferably the universal operating element (66), or the universal regulating button (66) is formed as an electronic handwheel.

7. Microtome according to one of the preceding claims,
**characterised in that**
the first drive device (22) has a linear motor, or a DC motor, and/or the second drive device (36) has a stepper motor.

8. Microtome according to one of the preceding claims,
**characterised in that**
the universal regulating button (66) in the shifting/tilting mode is adjustable forwards and backwards starting from a rest position in intersecting directions respectively up to an end position, and/or the universal regulating button (66) in the shifting/tilting mode is adjustable forwards and backwards from the rest position in the north-south direction and in the east-west direction up to the respective end position.

9. Microtome according to claim 8,
**characterised in that**
the universal regulating button (66) in the rest position is actuatable in the rotating and pushing mode.

10. Microtome according to claim 8 or 9,
**characterised in that**
the universal regulating button (66) at least in one end position is actuatable in the rotating and pushing mode, preferably the universal regulating button (66) in all end positions is actuatable in the rotating and pushing mode.

11. Microtome according to claim 10,
**characterised in that**
the universal regulating button (66) at least in two end positions is actuatable in the rotating and pushing mode.

12. Microtome according to one of claims 1 to 11,
**characterised in that**
the second drive device (36) has a piezo-feed system.

13. Microtome according to one of claims 1 to 12,
**characterised in that**
the universal regulating button (66) is suitable for programming the electronic control system (34).

14. Microtome according to one of the preceding claims,
**characterised in that**
the universal regulating button (66) is operated by a single hand in order to actuate it in a shifting/tilting and rotating mode, or to actuate it in a rotating and pushing mode, or to actuate it in a shifting/tilting and pushing mode, or to actuate it in a shifting/tilting, rotating and pushing mode.

15. Method for singlehandedly controlling a microtome according to claim 1, wherein the universal operating element (66) is operated singlehandedly in such a way that a single handed operation is carried out in a shifting/tilting and rotating mode, or in a rotating and pushing mode, or in a shifting/tilting and pushing mode, or in a shifting/tilting, rotating and pushing mode via the universal regulating button (66) or the universal operating element (66), in order to control both the vertical cutting movement and the horizontal feed movement of the object holding device.

## Revendications

1. Microtome avec un dispositif porte-lame (20) pour un couteau (18) et avec un dispositif porte-objet (12) pour un objet à découper en tranches fines, dans lequel le dispositif support d'objet (12) comprend, pour la réalisation d'un mouvement de coupe (14), un premier dispositif d'entraînement (22) et le dispositif support d'objet (12) respectivement le dispositif porte-lame (20) comprend, pour la réalisation d'un mouvement d'approche (16), un deuxième dispositif d'entraînement (36), comprenant une molette mécanique et/ou une molette électronique, par l'intermédiaire duquel le premier dispositif d'entraînement (22) est actionnable manuellement, dans lequel, aux premier et deuxième dispositifs d'entraînement (22, 36), correspond une électronique de commande (34) et un dispositif de manoeuvre (64) pour les première et deuxième dispositifs d'entraînement (22, 36), **caractérisé en ce que**
le dispositif de manoeuvre (64) correspondant à l'électronique de commande (34) pour les première et deuxième dispositifs d'entraînement (22, 36) comprend un élément de manoeuvre (66) qui est actionnable, en tant que bouton de réglage universel (66) ou qu'élément de manoeuvre universel (66), dans un mode de poussée/de basculement et de rotation ou bien être actionné dans un mode de rotation et de pression, ou bien être actionné dans un mode de poussée/de basculement et de pression ou bien être actionné dans un mode de poussée/de basculement, de rotation et de pression, afin de contrôler aussi bien le mouvement de poussée vertical que le mouvement d'approche horizontal du dispositif support d'objet.

2. Microtome selon la revendication 1,
**caractérisé en ce que**
l'élément de manoeuvre (66) est conçu comme un élément de manoeuvre d'une seule main (66) pour les deux dispositifs d'entraînement (22, 36).

3. Microtome selon la revendication 1 ou 2,
**caractérisé en ce que**
le microtome comprend un boîtier sur lequel est disposé un écran pour l'affichage d'informations de fonction, de préférence l'épaisseur de coupe de mise en forme et de coupe fine et/ou les modes de fonctionnement et/ou la vitesse de coupe et d'avance et/ou le nombre de coupes réalisées et/ou la somme des épaisseurs de coupe et/ou les valeurs d'avance résiduelles et/ou le statut d'exécution, arrêt/freinage et/ou la fenêtre de coupe et/ou le statut de programmation et/ou les informations de service.

4. Microtome selon l'une des revendications 1 à 3,
**caractérisé en ce que**
l'élément de manoeuvre universel (66) ou le bouton de réglage universel (66) est prévu sur un élément de manoeuvre qui est constitué d'un panneau de commande.

5. Microtome selon la revendication 4,
**caractérisé en ce que**
le panneau de commande est monté à gauche ou à droite sur un boîtier du microtome, de préférence il est positionné verticalement sur le boîtier du microtome ou bien il est placé horizontalement à côté du microtome.

6. Microtome selon l'une des revendications précédentes,
**caractérisé en ce que**
l'élément de manoeuvre universel (66) ou le bouton de réglage universel (66) est conçu comme un élément de manoeuvre universel électronique (66) ou comme un bouton de réglage universel électronique (66), de préférence **en ce que** l'élément de manoeuvre universel (66) ou le bouton de réglage universel (66) est conçu comme une molette électronique.

7. Microtome selon l'une des revendications précédentes,
**caractérisé en ce que**
le premier dispositif d'entraînement (22) comprend un moteur linéaire ou un moteur à courant continu et/ou **en ce que** le deuxième dispositif d'entraînement (36) comprend un moteur pas-à-pas.

8. Microtome selon l'une des revendications précédentes,
**caractérisé en ce que**
le bouton de réglage universel (66) est mobile avec un mouvement de va-et-vient, dans le mode de poussée/basculement, à partir d'une position de repos, dans des directions entrecroisées respectivement jusqu'à une position finale et/ou **en ce que** le bouton de réglage universel (66) est mobile avec un mouvement de va-et-vient, dans le mode de poussée/basculement, à partir de la position de repos, dans la direction nord-sud et dans la direction est-ouest, jusqu'à la position finale respective.

9. Microtome selon la revendication 8,
**caractérisé en ce que**
le bouton de réglage universel (66) est actionnable, dans la position de repos, dans le mode de rotation et de pression.

10. Microtome selon la revendication 8 ou 9,
**caractérisé en ce que**
le bouton de réglage universel (66) est actionnable, au moins dans une position finale, dans le mode de rotation et de pression, de préférence **en ce que** le bouton de réglage universel (66) est actionnable dans toutes les positions finales dans le mode de rotation et de pression.

11. Microtome selon la revendication 10,
**caractérisé en ce que**
le bouton de réglage universel (66) est actionnable, au moins dans deux positions finales, dans le mode de rotation et de pression.

12. Microtome selon l'une des revendications 1 à 11,
**caractérisé en ce que**
le deuxième dispositif d'entraînement (36) comprend un système d'avance piézoélectrique.

13. Microtome selon l'une des revendications 1 à 12,
**caractérisé en ce que**
le bouton de réglage universel (66) est adapté à la programmation de l'électronique de commande (34).

14. Microtome selon l'une des revendications précédentes,
**caractérisé en ce que**
le bouton de réglage universel (66) est commandé d'une seule main afin de l'actionner dans un mode de poussée/basculement et de rotation ou dans un mode de rotation et de pression, ou de l'actionner dans un mode de poussée/basculement et de pression ou de l'actionner dans un mode de poussée/basculement, de rotation et de pression.

15. Procédé de commande d'une seule main d'un microtome selon la revendication 1,
dans lequel l'élément de manoeuvre universel (66) est actionné d'une seule main, de façon à ce qu'une commande d'une seule main ait lieu par l'intermédiaire du bouton de réglage universel (66) ou de l'élément de manoeuvre universel (66), dans un mode de poussée/basculement ou de rotation ou dans un mode de rotation et de pression ou dans un mode de poussée/basculement et de pression ou dans un mode de poussée/basculement, de rotation et de pression, afin de contrôler aussi bien le mouvement de coupe verticale que le mouvement d'approche horizontal du dispositif support d'objet.
